Europäisches Patentamt

(19) European Patent Office

Office européen des brevets

(11) Numéro de publication : **0 207 844 B1**

# (12) FASCICULE DE BREVET EUROPEEN

(45) Date de publication du fascicule du brevet :
05.06.91 Bulletin 91/23

(51) Int. Cl.⁵ : **G01C 19/64, B65H 55/04**

(21) Numéro de dépôt : **86401316.4**

(22) Date de dépôt : **17.06.86**

(54) **Procédé de bobinage d'un gyroscope à fibre optique, et bobine de fibre optique ainsi obtenue.**

(30) Priorité : **21.06.85 FR 8509499**

(43) Date de publication de la demande :
**07.01.87 Bulletin 87/02**

(45) Mention de la délivrance du brevet :
**05.06.91 Bulletin 91/23**

(84) Etats contractants désignés :
**DE GB IT NL SE**

(56) Documents cités :
**FR-A- 2 409 518**
**US-A- 3 102 953**
**Dictionnaire des difficultes de langue fran-çaise edite par les editions Larousse T133/85(Jo1988,441) T514/88.**

(73) Titulaire : **THOMSON-CSF**
**51, Esplanade du Général de Gaulle**
**F-92800 Puteaux (FR)**

(72) Inventeur : **Arditty, Hervé**
**THOMSON-CSF SCPI 19, avenue de Messine**
**F-75008 Paris (FR)**
Inventeur : **Bettini, Jean-Pierre**
**THOMSON-CSF SCPI 19, avenue de Messine**
**F-75008 Paris (FR)**
Inventeur : **Botti, Serge**
**THOMSON-CSF SCPI 19, avenue de Messine**
**F-75008 Paris (FR)**
Inventeur : **Graindorge, Philippe**
**THOMSON-CSF SCPI 19, avenue de Messine**
**F-75008 Paris (FR)**
Inventeur : **Lefevre, Hervé**
**THOMSON-CSF SCPI 19, avenue de Messine**
**F-75008 Paris (FR)**

(74) Mandataire : **Lepercque, Jean et al**
**THOMSON-CSF SCPI**
**F-92045 PARIS LA DEFENSE CEDEX 67 (FR)**

EP 0 207 844 B1

## Description

La présente invention se rapporte à un procédé de bobinage de l'enroulement de fibre optique formant l'anneau d'un gyroscope.

Un type connu de gyroscope est constitué à partir d'un interféromètre en anneau, encore appelé interféromètre de SAGNAC.

Un tel interféromètre comporte principalement une source d'énergie lumineuse généralement constituée par un laser ; un dispositif optique constitué soit d'un certain nombre de miroirs, soit d'une fibre optique enroulée sur elle-même, ce dispositif formant guide d'onde ; un dispositif de séparation et de mélange de la lumière et un dispositif de détection et de traitement du signal détecté.

Il est connu que dans ces interféromètres, il existe deux ondes issues du dispositif séparateur et parcourant en sens opposés un même trajet optique.

Une propriété fondamentale des interféromètres en anneau est la réciprocité qui peut s'exprimer comme suit : toute perturbation du trajet optique affecte semblablement les deux ondes malgré que ces deux ondes ne la subissent ni exactement au même instant, ni dans le même sens.

Il existe cependant deux types de perturbations qui affecte réciprocité.

Il s'agit, d'une part, des perturbations qui varient dans le temps, ce dans un laps de temps comparable au temps que mettent les ondes à se propager le long du chemin optique de l'interféromètre ; et, d'autre part, des perturbations dites "non-réciproques", c'est-à-dire les perturbations n'ayant pas le même effet sur les ondes selon qu'elles se propagent dans un sens ou dans un autre le long du chemin optique. Il s'agit d'effets physiques qui détruisent la symétrie du milieu dans lequel se propagent les ondes.

Deux effets connus présentent ce dernier type de perturbations :

– l'effet Faraday, ou effet magnéto-optique colinéaire, par lequel un champ magnétique crée une orientation préférentielle du spin des électrons d'un matériau optique ;

– et l'effet Sagnac, ou effet inertiel relativiste, dans lequel la rotation de l'interféromètre par rapport à un repère Galliléen détruit la symétrie du temps de propagation. Cet effet est mis à profit pour réaliser des gyroscopes notamment.

L'invention se place dans ce cadre d'application.

En l'absence de manifestation de perturbations "non réciproques", la différence de phase (que l'on appelera dans ce qui suit $\Delta\phi$) entre les deux ondes qui se recombinent dans le dispositif de séparation et de mélange après avoir parcouru le chemin optique est nulle. Dans le cas contraire, c'est-à-dire lorsque le système tourne dans l'espace inertiel, la différence de phase obéit à la relation :

$$\Delta\phi = \frac{8\pi f}{c^2} \vec{S} . \vec{\Omega} \tag{1}$$

relation dans laquelle f est la fréquence de l'onde optique et c la célérité de la lumière dans le vide.

Le déphasage $\Delta\phi$ dépend du produit scalaire entre le vecteur surface apparente $\vec{S}$ de la bobine de fibre utilisée pour constituer l'anneau, et le vecteur rotation $\vec{\Omega}$. Le système est donc sensible au flux du vecteur rotation à travers la bobine.

Le vecteur surface apparente $\vec{S}$ est défini par la relation :

$$\vec{S} = \oint \frac{1}{2} \vec{r}(M) \wedge \vec{dl} \tag{2}$$

relation dans laquelle le signe $\oint$ représente l'intégrale sur le contour fermé défini par le chemin suivi par la lumière le long de la fibre, M un point quelconque de ce contour fermé et $\vec{dl}$ est le vecteur différence de marche.

La direction du vecteur $\vec{S}$ est parallèle à l'axe de symétrie de la bobine. Le système détecte donc les rotations autour de cet axe et est insensible aux rotations autour d'axes orthogonaux. Pour de nombreuses applications de navigation, il est fondamental que la direction de l'axe soit très stable. Cette stabilité, dite de pointage, peut être affectée par des déplacements des différentes spires de la bobine de fibre.

Le problème est simple à résoudre dans le cas d'une bobine à une seule couche. Il est possible de réaliser dans un tube support de la bobine une gorge hélicoidale formant pas-de-vis, de période supérieure au diamètre de la fibre, et d'enrouler la fibre dans la gorge hélicoidale ainsi réalisée. Un problème se pose pour la deuxième couche. On peut revenir le long du tube support en bobinant toujours dans le même sens de rotation, mais

2

alors le pas de bobinage est inversé. A chaque spire, la fibre devra sortir de la gorge définie par la couche précédente, passer au-dessus d'une spire et repasser dans la gorge suivante. Une telle disposition est décrite par exemple, dans le brevet US-A-3 102 953, plus particulièrement à la figure 2. Ce point de passage est aléatoire et peut varier en particulier en fonction de la température : phénomènes de dilatation. Cela modifie l'orientation de la spire et donc affecte la stabilité de pointage, créant en particulier de l'hystérésis si la fibre ne revient pas en position au cours d'un cycle thermique. Si maintenant on inverse le sens de rotation dans le bobinage, il est possible alors d'enrouler la deuxième couche dans la gorge définie par la première, mais l'effet Sagnac dû à la rotation va s'annuler, de même qu'on annule l'auto-inductance d'une bobine électromagnétique.

La présente invention se fixe pour but un procédé de bobinage de l'enroulement de fibre optique formant l'anneau d'un gyromètre qui permet d'en améliorer la stabilité de pointage.

L'invention a donc pour objet un procédé de bobinage d'un gyroscope comportant un anneau constitué d'une bobine de fibre optique multicouche, caractérisé en ce que, après avoir enroulé en vrac l'ensemble de la fibre sur un bobineau intermédiaire de faible diamètre et de longueur suffisante pour la contenir en entier, on rebobine la fibre sur un tube support avec un pas supérieur au diamètre de la fibre pour constituer une première couche, et après constitution de cette couche on fait passer le bobineau à l'intérieur du tube support où la fibre est positionnée en spirale pour rebobiner une deuxième couche dans l'interstice interspires de la couche précédente, et ainsi de suite autant de fois que l'on désirera réaliser des couches successives.

L'invention a encore pour objet la bobine de fibre optique obtenue par le procédé de bobinage.

L'invention sera mieux comprise et d'autres particularités et avantages apparaîtront à l'aide de la description qui suit et des figures annexées :
– la figure 1 illustre le processus complet de bobinage d'une couche selon l'invention ;
– les figures 2 à 5 illustrent des étapes du' bobinage de deux couches successives ;
– les figures 6 à 8 illustrent des aspects de détail d'une bobine de fibre optique réalisée selon le procédé de l'invention ;
– les figures 9 à 12 illustrent une variante de réalisation supplémentaire du procédé de l'invention.

Le procédé selon l'invention consiste à faire passer en spirale la fibre optique, après bobinage d'une couche à l'intérieur d'un tube porteur, toujours dans le même sens d'enroulement. En ressortant à l'autre extrémité du tube, il est alors possible de bobiner la deuxième couche dans le même sens de rotation tout en suivant la gorge définie par la couche précédente. Cela nécessite d'avoir bobiné l'ensemble de la fibre sur un bobineau intermédiaire, de diamètre hors-tout inférieur au diamètre intérieur du tube support, de façon à pouvoir le faire passer facilement à travers ce tube. Cette manoeuvre peut être répétée plusieurs fois. Une couche de n spires définissant n-1 espaces interfibres susceptibles de recevoir la fibre de la couche suivante, les différentes couches montant en quinconce. Chaque spire est maintenant tenue latéralement par l'espace interspire de la couche précédente ce qui donne une bien meilleure stabilité de positionnement et réduit les effets d'hystérésis thermique.

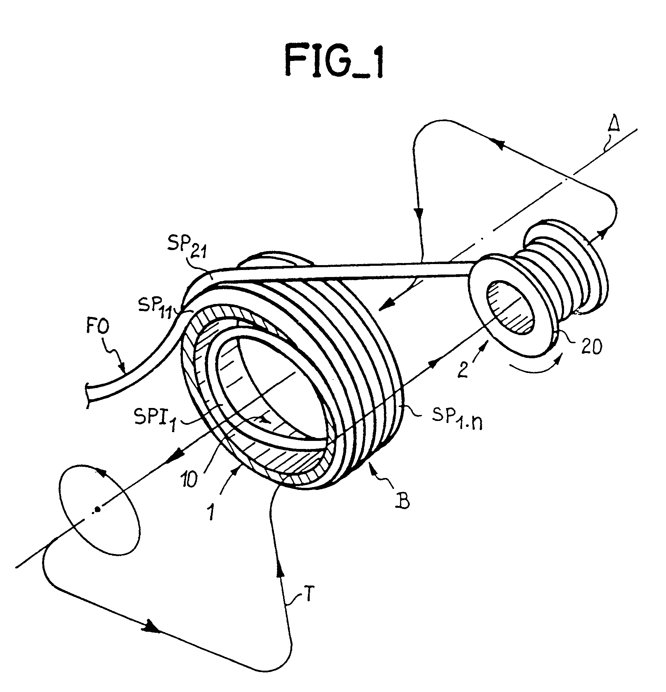

La figure 1 illustre schématiquement l'ensemble des opérations de bobinage d'une couche complète.

Sur la figure 1, les spires de la première couche sont repérées $SP_{11}$ à $SP_{1n}$. De la même manière, la spire de la deuxième couche représentée sur la figure 1 est repérée $SP_{21}$. Le support cylindrique 1 comporte un canal central 10 de diamètre supérieur au diamètre extérieur 20, hors tout, du bobineau 2 sur lequel est enroulée la fibre optique FO.

L'axe de la bobine B de fibre optique FO, qui se constitue couche par couche, est repéré $\Delta$.

Sur la figure 1, le trajet suivi par le bobineau 2 est repéré par la référence T.

Il est supposé que le bobinage commence par la partie gauche du support 1, sur la figure 1, et se termine, après n spires, à l'autre extrémité de support : partie droite sur la figure 1. Le bobineau 2 se déplace également, pour ce faire, suivant une direction parallèle à l'axe $\Delta$ de gauche à droite, tandis que le support est mis en rotation autour de l'axe $\Delta$.

Ensuite, il est introduit dans le canal central 10 du support 1 et ressorti vers la gauche. La fibre optique FO est enroulée en spirale, sous la forme d'une spire interne $SPI_i$, contre la paroi du canal 10, pendant le passage du bobineau 2 à l'intérieur de celui-ci. Il y a une seule spire interne par couche.

Ensuite l'opération de bobinage se poursuit par les spires de la seconde couche qui se logent dans les espaces inter-spires de la première couche. Seule la première spire $SP_{21}$ de la seconde couche a été représentée sur la figure 1.

Le cycle recommence alors de façon itérative pour bobiner le nombre de couches nécessaires.

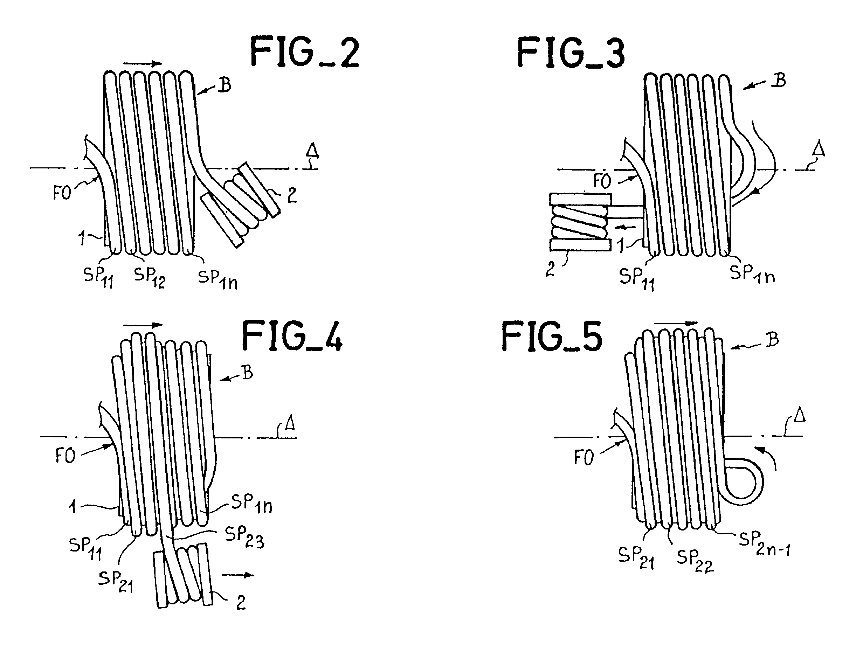

Les figures 2 à 5 illustrent de façon plus détaillée quatre stades de l'opération de bobinage de deux couches successives, en l'occurence les première et seconde couches.

Sur la figure 2 est représenté l'état de la bobine après le bobinage d'une couche complète : spires $SP_{11}$ à $SP_{1n}$.

Le bobineau 2 est ensuite enfilé à l'intérieur du support 1 et ressort sur la gauche : figure 3.

3

L'opération de bobinage de la seconde couche commence alors, comme illustré sur la figure 4 : spires $SP_{21}$ à $SP_{23}$.

Enfin, après bobinage complet de la seconde couche, comme illustré sur la figure 5 : spires $SP_{21}$ à $SP_{2 n-1}$, le bobineau 2 (non visible sur la figure 5) est repassé à nouveau à l'intérieur du support 1.

Il est naturellement supposé que la bobine B comporte, dans son stade final, plus de deux couches. Dans le cas contraire l'opération de bobinage serait terminée au stade illustré par la figure 5.

Il existe une contrainte liée au pas de bobinage.

En effet, le pas de bobinage doit bien sûr être supérieur au diamètre de la fibre mais aussi être inférieur à $\sqrt{3}$ fois ce diamètre si on ne veut pas que la troisième couche soit soulevée par la première.

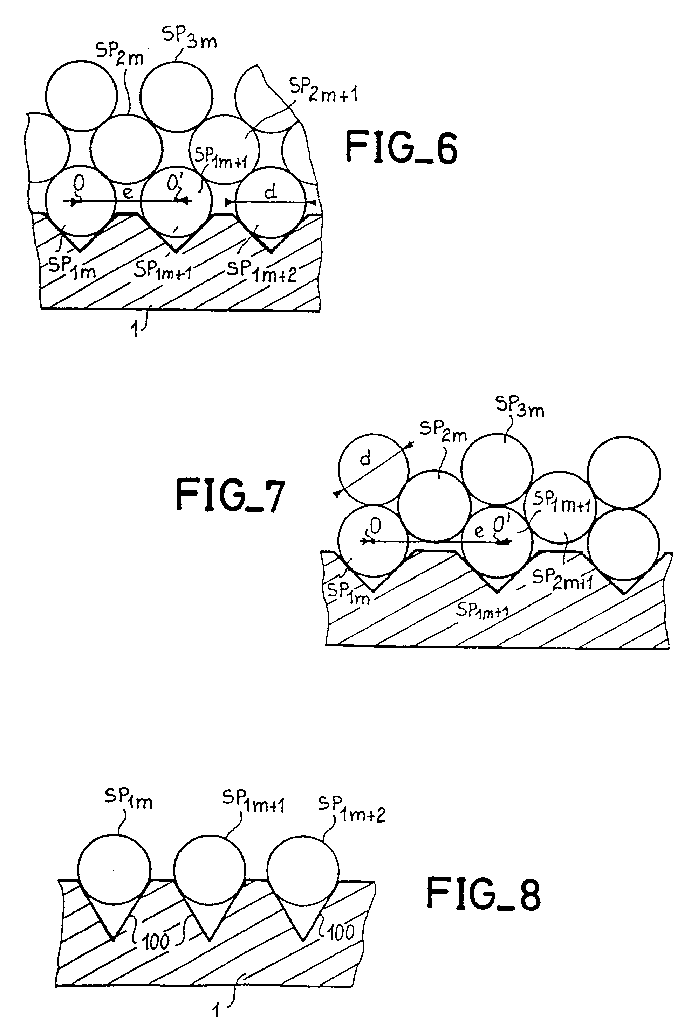

Les figures 6 et 7 illustrent deux situations possibles.

La figure 6 illustre un détail de la bobine B en coupe longitudinale.

La première couche comprend les spires $SP_{1m}$, $SP_{1 m+1}$, $SP_{1m+2}$ ; m étant en nombre arbitraire compris entre 1 et n. La deuxième couche comprend notamment deux spires $SP_{2m}$, $SP_{2 m+1}$ enroulées dans les sillons formés par les espaces interspires de la première couche. De la même manière, une spire de la troisième couche $SP_{3m}$ est disposée dans le sillon formé par l'espace interspire des spires $SP_{2m}$ et $SP_{2m+1}$.

Il a été supposé ici que le pas de bobinage, qui peut être représentée par la distance e entre les centres O et O′ des sections droites de deux spires contigües, vérifie simultanément les relations qui viennent d'être indiquées, soit :

$$e > d \quad (3)$$
$$\text{et } e < \sqrt{3}\,d \quad (4)$$

d étant le diamètre extérieur de la fibre optique FO avec sa gaine protectrice.

La figure 7 illustre le cas pour lequel la distance e est supérieure à $\sqrt{3}\,d$.

On réalise aisément qu'une spire $SP_{3m}$ de la troisième couche est alors soulevée par une spire $SP_{1 m+1}$ de la première couche. Sa position dans l'espace interspire des spires $SP_{2m}$ et $SP_{2 m+1}$ de la deuxième couche n'est donc plus définie de façon précise.

Seul l'empilement illustré par la figure 6 présente la stabilité recherchée par l'invention, chaque spire étant calée par deux spires de la couche inférieure sans possibilité de débattement.

Pour définir avec précision la position des spires de la première couche, le tube support 1 peut être muni d'un sillon hélicoïdal à la manière d'un pas de vis. La figure 8 illustre cette possibilité, commune d'ailleurs à l'Art Connu.

Il est représenté sur cette figure 8, trois spires de la première couche $SP_{1m}$ à $SP_{1 m+2}$. Le support 1 est muni d'un sillon hélicoidal 100, par exemple, de façon classique, à structure en Vé, dans lequel est positionnée la fibre optique FO pour former les spires $SP_{1m}$ à $SP_{1 m+2}$ de la première couche.

Selon une autre variante de réalisation, il est possible de bobiner une précouche indépendante pour éviter que d'éventuels défauts d'usinage du tube-support affectent le comportement optique de la fibre : pertes dues aux microcourbures, couplage de polarisation, etc.

Si l'on se reporte à nouveau à la figure 6, les spires de la première courbe, $SP_{1m}$ à $SP_{1 m+2}$, forment alors une couche fictive sur laquelle sont bobinées les autres couches.

Le matériau utilisé pour le tube porteur n'est pas systématiquement imposé. Son choix résulte d'un compromis entre la facilité d'usinage, la stabilité thermique, l'amagnétisme et la légèreté. On peut également envisager l'utilisation de cire fusible pour obtenir des bobines auto-porteuses.

On peut noyer la fibre optique dans une substance appropriée, par exemple un adhésif durcissant lorsqu'il est exposé aux rayons U.V. Un exemple d'une telle substance est le produit vendu sous la référence Commerciale 6154 de PANACOL. Le durcissement effectué, le mandrin est retiré pour obtenir une bobine "en l'air".

Le procédé qui vient d'être décrit est susceptible d'améliorations supplémentaires.

Il est reconnu que des variations temporelles d'un gradient thermique appliqué à la bobine peuvent provoquer un déphasage parasite dans un gyromètre à fibre optique. Il a été suggéré de bobiner la fibre en couches alternées à partir de son milieu, plaçant ainsi en proximité les parties symétriques de la bobine.

Cette approche a été suggérée dans l'article de SCHUPE : "Thermally induced non-reciprocity in the fiber-optic interferometer" paru dans "APPLIED OPTICS", n° 19, pages 654-655, en 1980.

Le procédé selon l'invention reste compatible avec cette approche moyennant quelques modifications. La fibre doit être bobinée par moitié sur deux bobineaux intermédiaires de façon à pouvoir la débobiner à partir du milieu situé, au départ, entre les deux bobineaux. Une première couche est alors bobinée en débobinant un des bobineaux intermédiaires, l'autre restant solidaire du tube porteur et tournant donc avec lui. A la fin de la première couche les bobineaux sont interchangés en les passant à travers le tube porteur. La deuxième couche est alors bobinée à partir de la fibre provenant du deuxième bobineau et ainsi de suite. L'ensemble peut être terminé par une couche complète, le milieu de la bobine étant alors au début de la première couche si le nombre de couches est pair, et au milieu si le nombre de couches est impair. On peut aussi préférer avoir deux demi-couches provenant de chaque bobineau ce qui permet facilement de dérouler chacune des extrémités si cela s'avère nécessaire. Le milieu de la bobine est alors l'extrémité de la première couche si le nombre de couches est pair et le milieu si le nombre de couches est impair.

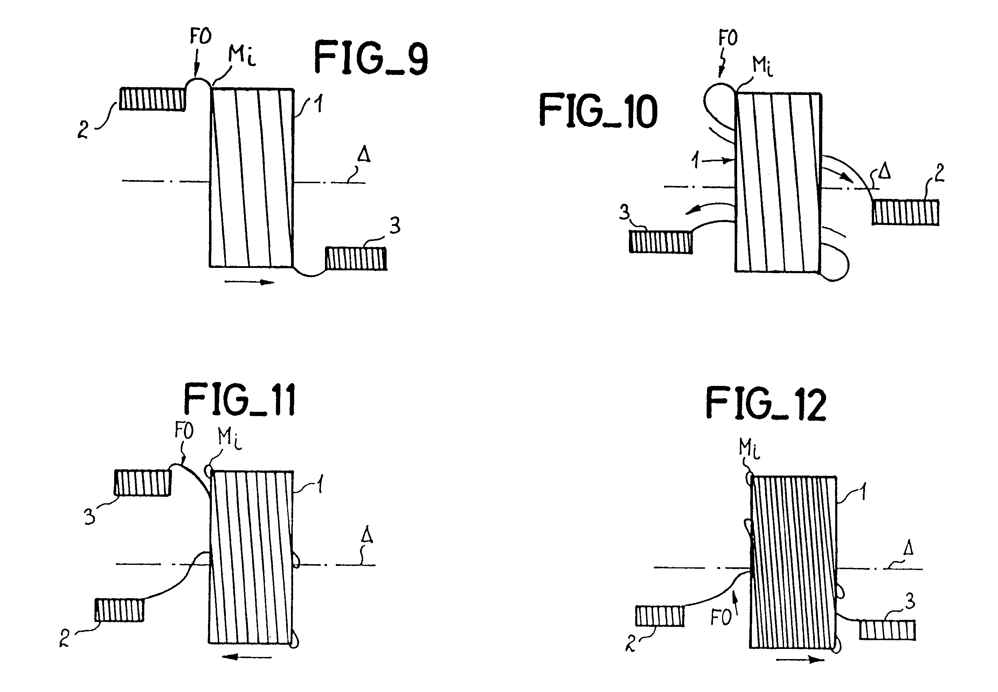

Les figures 9 à 12 illustrent différentes étapes du procédé de bobinage de l'invention selon l'une des variantes sus-mentionnées de cette approche.

La fibre optique FO est répartie sur deux bobineaux intermédiaires 2 et 3. Le milieu Mi de la fibre FO qui constituera, une fois bobinée, l'anneau du gyromètre est placé, dans l'exemple illustré par la figure 9 au début de la première couche, spire la plus à gauche du support 1. La figure 9 illustre schématiquement les positions respectives du bobineau 2, à gauche du support 1 et tournant avec lui, et du bobineau 3, à droite du support 1 en fin de bobinage de la première couche. Le bobineau 3 s'est déplacé de la gauche vers la droite pendant cette première étape de bobinage.

Ensuite, comme illustré par la figure 10, les bobineaux 2 et 3 sont intervertis. On fait passer les bobineaux 2 et 3 au travers du support 1.

Une deuxième couche est alors bobinée comme illustrée par la figure 11, toujours dans le même sens, le bobineau 2 se déplaçant vers la gauche et le bobineau 3 tournant avec le support 1.

La figure 11 illustre la fin de cette étape.

Une nouvelle couche est alors bobinée à partir du bobineau 3 se déplaçant vers la droite.

La figure 12 illustre la fin de cette étape. A la suite de cette étape, les bobineaux vont être à nouveau intervertis en les faisant passer au travers du support.

Comme précédemment, ce processus se répète jusqu'à ce que le nombre de couches nécessaires soit obtenu.

A chaque passage d'un bobineau au travers du support 1 la fibre optique est enroulée en spirale sur la face interne du support pour former une spire interne unique.

## Revendications

1. Procédé de bobinage d'un gyroscope comportant un anneau constitué d'une bobine de fibre optique multicouche, caractérisé en ce que, après avoir enroulé en vrac l'ensemble de la fibre sur un bobineau intermédiaire de faible diamètre et de longueur suffisante pour la contenir en entier, on rebobine la fibre sur un tube support avec un pas supérieur au diamètre de la fibre pour constituer un première couche, et après constitution de cette couche on fait passer le bobineau à l'intérieur du tube support où la fibre est positionnée en spirale pour rebobiner une deuxième couche dans l'interstice interspires de la couche précédente, et ainsi de suite autant de fois que l'on désirera réaliser des couches successives.

2. Procédé selon la revendication 1, caractérisé en ce que deux couches successives sont réalisées.

3. Procédé selon l'une quelconque des revendications 1 ou 2, caractérisé en ce que ledit pas (e) est choisi supérieur au diamètre extérieur (d) de la fibre optique (FO) et inférieur à cette valeur multipliée par $\sqrt{3}$.

4. Procédé selon l'une quelconque des revendications 1 à 3, caractérisé en ce que ledit support (1) comporte sur sa paroi extérieure une entaille hélicoïdale (100) en forme de Vé à pas constant (e) dans laquelle est enroulée la fibre optique (FO) pour former la première couche.

5. Procédé selon l'une quelconque des revendications 1 à 3 caractérisé en ce que ladite première couche est une précouche indépendante sur laquelle sont bobinées les couches formant la bobine (B) et dont les espaces interspires définissent un pas constant (e).

6. Procédé selon l'une quelconque des revendications 1 à 5, caractérisé en ce que ledit support (1) est en matériau fusible de manière à réaliser une bobine (B) multicouche auto-porteuse.

7. Procédé selon l'une quelconque des revendications 1 à 6, caractérisé en ce que l'étape préliminaire de bobinage consiste à répartir ladite longueur de fibre optique (FO) nécessaire à la réalisation de la bobine (B) en deux portions égales et à bobiner ces deux portions égales sur des première (2) et seconde (3) bobines intermédiaires, et en ce que le bobinage des couches successives s'effectue en dévidant, alternativement, les première (2) et seconde (3) bobines intermédiaires et en intervertissant, à chaque couche, ces bobines en les faisant passer au travers dudit canal central (14), de manière à réaliser une bobine dont le milieu (Mi) de l'enroulement de fibre optique (FO) est situé dans la première couche

8. Procédé selon la revendication 7, caractérisé en ce que le nombre de couches de la bobine (b) est pair et le milieu (Mi) de l'enroulement de fibre optique (FO) est au début de la première couche.

9. Procédé selon la revendication 7, caractérisé en ce que le nombre de couches de la bobine (b) est impair et le milieu (Mi) de l'enroulement est au milieu de la première couche.

10. Procédé selon l'une quelconque des revendications 1 à 9 selon lequel la fibre positionnée en spirale à l'intérieur du support ne comprend qu'une seule spire.

11. Bobine multicouche de fibre optique formant le bobinage d'un gyroscope et comprenant au moins deux couches de fibre optique réalisée selon l'une quelconque des revendications 1 a 10, caractérisée en ce que les fibres sont bobinées sur un support (1) comprenant un canal central (10) ; les fibres des deux couches sont bobinées parallélement et dans le même sens et sont reliées par une fibre optique (SP$_1$) positionnée en spirale dans le canal central (10) dans le même sens d'enroulement que les deux dites couches de fibre optique.

12. Bobine multicouche de fibre optique selon la revendication 11, caractérisée en ce que le support (1) comporte une entaille hélicoïdale (100) dans laquelle est placée la fibre de la première couche, la fibre de la deuxième couche étant placée dans l'interstice interspires de la couche précédente.

13. Bobine multicouche de fibre optique selon la revendication 12, comprenant plus de deux couches, caractérisée en ce que le pas de bobinage des différentes couches est supérieur au diamètre de la fibre et inférieur a $\sqrt{3}$ fois le diamètre de la fibre

14. Bobine multicouche de fibre optique selon l'une quelconque des revendications 11 à 13, caractérisée en ce que la fibre positionnée en spirale à l'intérieur du support ne comprend qu'une seule spire.


## Ansprüche

1. Verfahren zur Bewicklung eines Gyroskops, das einen Ring aufweist, der von einer Mehrschicht-Lichtleitfaserspule gebildet wird, dadurch gekennzeichnet, daß nach dem losen Aufwikkeln der gesamten Faser auf eine Zwischenhaspel mit geringem Durchmesser und einer Länge, die ausreicht, um die Faser vollständig aufzunehmen, die Faser mit einer Ganghöhe, die größer als der Druchmesser der Faser ist, erneut auf einen Rohrträger aufgewickelt wird, um eine erste Schicht zu bilden, nach der Bildung dieser Schicht die Spulenhaspel in das Innere des Rohrträgers bewegt wird, wo die Faser spiralförmig angeordnet wird, um in den Zwischenräumen zwischen den Windungen der vorhergehenden Schicht eine zweite Schicht neu zu wickeln, und dies entsprechend der Anzahl der gewünschten aufeinanderfolgenden Schichten wiederholt wird.

2. Verfahren gemäß Anspruch 1, dadurch gekennzeichnet, daß zwei aufeinanderfolgende Schichten hergestellt werden.

3. Verfahren gemäß einem der Ansprüche 1 oder 2, dadurch gekennzeichnet, daß die Ganghöhe (e) größer als der Außendurchmesser (d) der Lichtleitfaser (FO) und kleiner als dieser mit $\sqrt{3}$ multiplizierte Wert ist.

4. Verfahren gemäß einem der Ansprüche 1 bis 3, dadurch gekennzeichnet, daß der Träger (1) an seiner Außenwand eine spiralförmige Einkerbung (100) in Form eines V mit konstanter Ganghöhe (e) aufweist, in der die Lichtleitfaser (FO) aufgewickelt wird, um die erste Schicht zu bilden.

5. Verfahren gemäß einem der Ansprüche 1 bis 3, dadurch gekennzeichnet, daß die erste Schicht eine unabhängige Vorschicht ist, auf die die die Spule (B) bildenden Schichten aufgewickelt werden und deren Zwischenräume eine konstante Ganghöhe (e) definieren.

6. Verfahren gemäß einem der Ansprüche 1 bis 5, dadurch gekennzeichnet, daß der Träger (1) aus einem schmelzbaren Material besteht, um so eine selbsttragende Mehrschicht-Spule (B) herzustellen.

7. Verfahren gemäß einem der Ansprüche 1 bis 6, dadurch gekennzeichnet, daß die Bewicklungsvorstufe die Unterteilung der für die Herstellung der Spule (B) erforderlichen Länge der Lichtleitfaser (FO) in zwei gleiche Teile und die Wicklung dieser zwei gleichen Teile auf eine erste (2) und eine zweite (3) Zwischenspule umfaßt und daß die Bewicklung der nachfolgenden Schichten durch abwechselndes Abwickeln der ersten (2) und der zweiten (3) Zwischenspule und durch Austauschen dieser Spulen bei jeder Schicht, indem sie durch Mittelkanal (14) bewegt werden, ausgeführt wird, derart, daß eine Spule hergestellt wird, bei der sich die Mitte (Mi) der Wicklung der Lichtleitfaser (FO) in der ersten Schicht befindet.

8. Verfahren gemäß Anspruch 7, dadurch gekennzeichnet, daß die Anzahl der Schichten der Spule (b) geradzahlig ist und daß sich die Mitte (Mi) der Wicklung der Lichtleitfaser (FO) am Anfang der ersten Schicht befindet.

9. Verfahren gemäß Anspruch 7, dadurch gekennzeichnet, daß die Anzahl der Schichten der Spule (b) ungeradzahlig ist und daß sich die Mitte (Mi) der Wicklung in der Mitte der ersten Schicht befindet.

10. Verfahren gemäß einem der Ansprüche 1 bis 9, gemäß dem die im Inneren des Trägers spiralförmig angeordnete Faser nur eine einzige Windung umfaßt.

11. Lichtleitfaser-Mehrschichtspule, die die Bewicklung eines Gyroskops bildet und wenigstens zwei Lichtleitfaser- Schichten umfaßt, die gemäß einem der Ansprüche 1 bis 10 hergestellt sind, dadurch gekennzeichnet, daß die Fasern auf einen einen Mittelkanal (10) aufweisenden Träger (1) gewickelt werden, die Fasern der zwei Schichten parallel und im gleichen Wicklungssinn gewickelt werden und mittels einer Lichtleitfaser (SP$_1$), die spiralförmig im Mittelkanal (10) im gleichen Wicklungssinn wie die zwei Lichtleitfaserschichten angeordnet ist, verbunden sind.

12. Mehrschichtspule gemäß Anspruch 11, dadurch gekennzeichnet, daß der Träger (1) eine spiralförmige Einkerbung (100) aufweist, in der die Faser der ersten Schicht angeordnet wird, wobei die Faser der zweiten Schicht im Zwischenraum zwischen den Windungen der vorhergehenden Schicht angeordnet wird.

13. Lichtleitfaser-Mehrschichtspule gemäß Anspruch 12, mit mehr als zwei Schichten, dadurch gekennzeichnet, daß die Ganghöhe der Bewicklung der verschiedenen Schichten größer als der Durchmesser der Faser und kleiner als der mit $\sqrt{3}$ multiplizierte Durchmesser der Faser ist.

14. Lichtleitfaser-Mehrschichtspule gemäß einem der Ansprüche 11 bis 13, dadurch gekennzeichnet, daß die im Inneren des Trägers spiralförmig angeordnete Faser nur eine einzige Windung umfaßt.

# Claims

1. A method of winding a gyroscope comprising a ring made up of a multilayer optic fiber coil, characterized in that, after having bulk wound all of the fiber on an intermediate coil with a small diameter and with a length sufficient in order to hold the same entirely, the fiber is rewound on a support tube with pitch greater than the diameter of the fiber in order to constitute a first layer and after forming this layer the coil is moved into the inside of the support tube where the fiber is positioned spirally in order to rewind a second layer in the space between the turns of the preceding layer and so on as many times as the production of successive layers is desired.

2. The method as claimed in claim 1, characterized in that two successive layers are produced.

3. The method as claimed in claim 1 or claim 2, characterized in that the said pitch (e) is selected to be greater than the outside diameter (d) of the optic fiber (FO) and less than this value multiplied by $\sqrt{3}$.

4. The method as claimed in any one of the preceding claims 1 through 3, characterized in that the said support (1) is provided on its outer wall surface with a helical groove (100) in the form of a letter V with a constant pitch (e) in which the optic fiber (FO) is wound in order to constitute the first layer.

5. The method as claimed in any one of the preceding claims 1 through 3, characterized in that the said first layer is an independent preliminary layer, on which the layers forming the coil (B) are wound and of which the spaces between the turns comply with a constant pitch (e).

6. The method as claimed in any one of the preceding claims 1 through 5, characterized in that the said support (1) is a fusible material in such a manner as to produce a self-supporting multilayer coil (B).

7. The method as claimed in any one of the preceding claims 1 through 6, characterized in that the preliminary winding stage consists of distributing the said length of optic fiber (FO) necessary for the production of the coil (B) in two equal portions and of winding these two equal portions on the first (2) and the second (3) intermediate coils, and in that the winding of the successive layers is performed by unwinding, alternately, the first (2) and the second (3) intermediate coil and inverting, for each layer, said coils and moving them through the said central channel (14) in such a manner as to produce a coil whose center (Mi) of winding of the optic fiber (FO) is positioned in the first layer.

8. The method as claimed in claim 7, characterized in that the number of layers of the coil (b) is even and the center (Mi) of the optic fiber (FO) winding is at the beginning of the first layer.

9. The method as claimed in claim 7, characterized in that the number of layers of the coil (b) is uneven and the center (Mi) of the winding is at the center of the first layer.

10. The method as claimed in any one of the preceding claims 1 through 9, in accordance with which the fiber positioned in a spiral in the inside of the support comprises one turn only.

11. A multilayer coil of optic fiber constituting the coil system of a gyroscope and comprising at least two layers of optic fiber and produced by the method in accordance with any one of the claims 1 through 10, characterized in that the fiber are wound on a support (1) comprising a central channel (10) ; the fibers of the two layers are wound in parallelism and in the same direction and are connected by an optic fiber (SP$_1$) positioned in a spiral in the central channel (10) in the same direction of winding as the two said layers of the optic fiber.

12. The multilayer coil of optic fiber as claimed in claim 11, characterized in that the support (1) is constituted by a helical groove (100) in which the fiber of the first layer is placed, the fiber of the second layer being placed in the space between turns of the preceding layer.

13. The multilayer coil of optic fiber as claimed in claim 12, comprising more than two layers, characterized in that the winding pitch of the different layers is greater than the diameter of the fiber and less than $\sqrt{3}$ times the diameter of the fiber.

14. The multilayer coil of optic fiber as claimed in any one of the preceding claims 11 through 13, characterized in that the fiber positioned as a spiral in the inside of the support is constituted by only one turn.

# FIG_1

FIG_2

FIG_3

FIG_4

FIG_5

FIG_6

FIG_7

FIG_8

FIG_9

FIG_10

FIG_11

FIG_12

EP 0 207 844 B1